(19) Europäisches Patentamt
European Patent Office
Office européen des brevets

(11) **EP 4 390 762 A1**

(12) **EUROPEAN PATENT APPLICATION**

(43) Date of publication:
**26.06.2024 Bulletin 2024/26**

(21) Application number: **23213668.9**

(22) Date of filing: **01.12.2023**

(51) International Patent Classification (IPC):
**G06N 3/042** (2023.01)  **G06N 3/0464** (2023.01)
**G06N 3/088** (2023.01)  **G06N 5/022** (2023.01)
**G06Q 10/0835** (2023.01)  **G06Q 10/047** (2023.01)

(52) Cooperative Patent Classification (CPC):
**G06N 3/042; G06N 3/0464; G06N 3/088;
G06Q 10/047; G06Q 10/083; G06Q 10/08355;**
G06N 5/022; G06N 7/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022 JP 2022207273**

(71) Applicant: **Rakuten Group, Inc.
Setagaya-ku
Tokyo 158-0094 (JP)**

(72) Inventors:
• **GHOSH, Som Subhra
  Setagaya-ku, Tokyo, 1580094 (JP)**
• **LIU, Yun Ching
  Setagaya-ku, Tokyo, 1580094 (JP)**

(74) Representative: **Hoffmann Eitle
Patent- und Rechtsanwälte PartmbB
Arabellastraße 30
81925 München (DE)**

(54) **INFORMATION PROCESSING APPARATUS, INFORMATION PROCESSING METHOD, AND PROGRAM**

(57)    To enable graph partitioning using a graph convolutional neural network without preparing training data, an information processing apparatus is configured to classify a plurality of delivery destinations into a plurality of groups, and includes: a learning unit that performs unsupervised learning to train a graph convolutional neural network, which is determined using an adjacency matrix indicating a connection relationship of the plurality of delivery destinations, and receives as input a feature matrix indicating a feature of the plurality of delivery destinations, the learning unit performing unsupervised learning using a first loss function defined such that the smaller a value for distance between delivery destinations belonging to a same group and the smaller a difference in features between delivery destinations belonging to a same group, the less a loss; and an output unit that outputs information about a group to which the plurality of delivery destinations belongs, the information being obtained by inputting the feature matrix into the graph convolutional neural network trained by the learning unit.

Fig. 1

## Description

**Field**

The present invention relates to an information processing apparatus, an information processing method, and a program.

**Background**

Graph partitioning is to partition a graph, which is made up of a set of vertices and edges connecting the vertices, into a plurality of subsets. Many algorithms for graph partitioning have been known, including the Kernighan-Lin algorithm, the Fiduccia-Mattheyses algorithm, and the Spectral Bisection method.

Recently, another algorithm using a graph convolution neural network, which is a neural network, has also been proposed as described in Non Patent Document 1: Thomas N. Kipf, Max Welling, Semi-Supervised Classification with Graph Convolutional Networks, [online], 2017, [retrieved November 24, 2022], Internet <URL http://arxiv.org/abs/1609.02907>.

**Summary**

When graph partitioning is performed using the technique described in Non Patent Document 1, it is necessary to train a graph convolutional neural network using training data. However, if a graph convolutional neural network is used to solve problems in the real world, it may be difficult to prepare its training data in advance.

The present disclosure therefore aims to provide an information processing apparatus, an information processing method, and a program that enable graph partitioning using a graph convolutional neural network without preparing training data.

According to one aspect of the present disclosure, an information processing apparatus is configured to classify a plurality of delivery destinations into a plurality of groups, and includes: a learning unit that performs unsupervised learning to train a graph convolutional neural network, which is determined using an adjacency matrix indicating a connection relationship of the plurality of delivery destinations, and receives as input a feature matrix indicating a feature of the plurality of delivery destinations, the learning unit performing unsupervised learning using a first loss function defined such that the smaller a value for distance between delivery destinations belonging to a same group and the smaller a difference in feature between delivery destinations belonging to a same group, the less a loss; and an output unit that outputs information about a group to which the plurality of delivery destinations belongs, the information being obtained by inputting the feature matrix into the graph convolutional neural network trained by the learning unit.

The present disclosure provides an information processing apparatus, an information processing method, and a program that enable graph partitioning using a graph convolutional neural network without preparing training data.

**Brief Description of Drawings**

Fig. 1 illustrates an example of a delivery management system according to the present embodiment.
Fig. 2 illustrates an example of the hardware configuration of the information processing apparatus.
Fig. 3 illustrates an example of the functional block configuration of the information processing apparatus.
Fig. 4 is a flowchart showing an example of a processing procedure executed by the information processing apparatus.
Fig. 5 explains a graph.
Fig. 6 illustrates the result of multiple delivery destinations classified into multiple groups.

**Description of Embodiment**

The following describes one embodiment of the present invention, with reference to the attached drawings. In the drawings, like numbers indicate like components.

<System configuration>

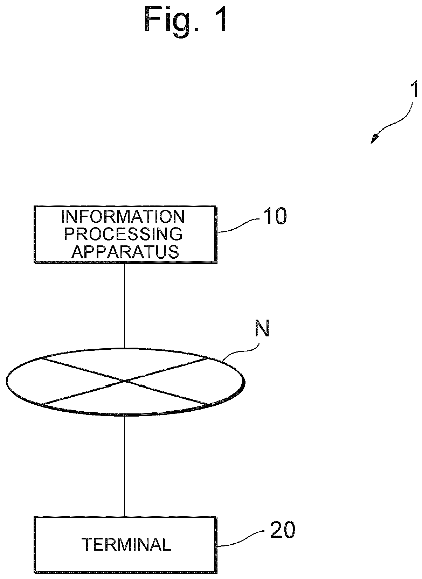

Fig. 1 illustrates an example of a delivery management system according to the present embodiment. The delivery management system 1 includes an information processing apparatus 10 and a terminal 20. The information processing apparatus 10 and the terminal 20 are connected via a wireless or wired communication network N to communicate with each other.

The information processing apparatus 10 manages delivery of packages, and performs a process of classifying (clustering) a plurality of delivery destinations into a plurality of groups. The information processing apparatus 10 may also determine a delivery route that enables efficient delivery of packages using an algorithm for solving a traveling salesman problem, for example, for multiple delivery destinations classified into the groups. The information processing apparatus 10 may include one or more physical servers, may include a virtual server that operates on a hypervisor, or may include a cloud server.

The terminal 20 is a terminal operated by the user, such as a smart phone, a tablet terminal, a mobile phone, a personal computer (PC), or a laptop PC. The terminal 20 has a screen, on which various data output from the information processing apparatus 10 is displayed. The user is able to operate the information processing apparatus 10 via the terminal 20.

The information processing apparatus 10 classifies a plurality of delivery destinations into a plurality of groups using a graph partitioning algorithm. Specifically, the information processing apparatus 10 classifies delivery destinations using a graph convolutional neural network (GCN). Hereafter, a graph convolutional neural network will be referred to simply as a graph convolutional network or GCN.

In conventional techniques, when performing graph partitioning using a GCN, it is necessary to prepare training data in advance and train the GCN with the training data. However, it is difficult to prepare the training data in advance because the delivery destinations of packages change every day. The information processing apparatus 10 of the present embodiment therefore uses a loss function, which is used for training a GCN, the loss function being configured to enable the training of GCN without using training data.

<Hardware configuration>

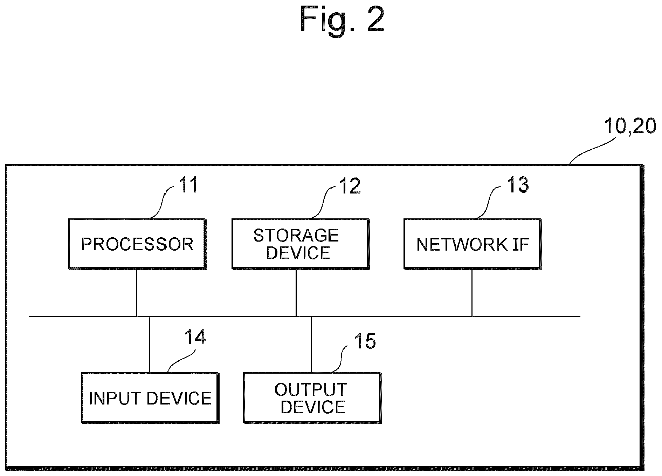

Fig. 2 illustrates an example of the hardware configuration of the information processing apparatus 10. The information processing apparatus 10 includes a processor 11 such as a central processing unit (CPU) or graphical processing unit (GPU), a storage device 12 such as memory (e.g., RAM or ROM), hard disk drive (HDD) and/or solid state drive (SSD), a network interface (IF) 13 for wired or wireless communication, an input device 14 for receiving input operations, and an output device 15 for outputting information. For instance, the input device 14 is a keyboard, touch panel, mouse and/or microphone. For instance, the output device 15 is a display, touch panel and/or speaker.

<Functional block configuration>

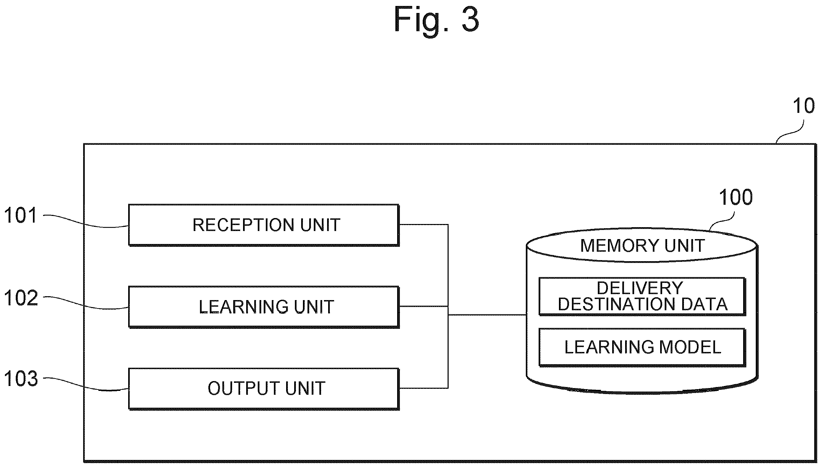

Fig. 3 illustrates an example of the functional block configuration of the information processing apparatus 10. The information processing apparatus 10 includes a memory unit 100, a reception unit 101, a learning unit 102, and an output unit 103. The memory unit 100 is implemented with the storage device 12 that the information processing apparatus 10 has. The reception unit 101, learning unit 102, and output unit 103 are implemented by execution of a program stored in the storage device 12 by the processor 11 of the information processing apparatus 10. This program can be stored in a storage medium. The storage medium storing this program may be a non-transitory computer readable medium. The non-transitory storage medium is not particularly limited, and examples include a universal serial bus (USB) memory and a compact disc read-only memory (CD-ROM).

The memory unit 100 stores various data on delivery destinations (hereinafter referred to as "delivery destination data") and a learning model. The learning model includes information that determines the model structure of the GCN and various parameter values.

The reception unit 101 receives various data inputs from the terminal 20. For instance, the reception units 101 receives the input of delivery destination data.

The learning unit 102 trains a learning model using delivery destination data and a predetermined loss function. Specifically, the learning unit 102 trains a GCN, which is determined using an adjacency matrix indicating the connection relationship of multiple delivery destinations, and receives as input a feature matrix indicating the features of the multiple delivery destinations. The training is unsupervised learning, using a loss function defined such that the smaller the value for distance between delivery destinations belonging to the same group and the smaller the difference in features between delivery destinations belonging to the same group, the less the loss (hereinafter referred to as the "first loss function").

The output unit 103 outputs information output from the learning model. Specifically, the output unit 103 outputs information about the groups to which a plurality of delivery destinations belongs, the information being obtained by inputting the feature matrix into the GCN trained by the learning unit 102.

<Processing procedure>

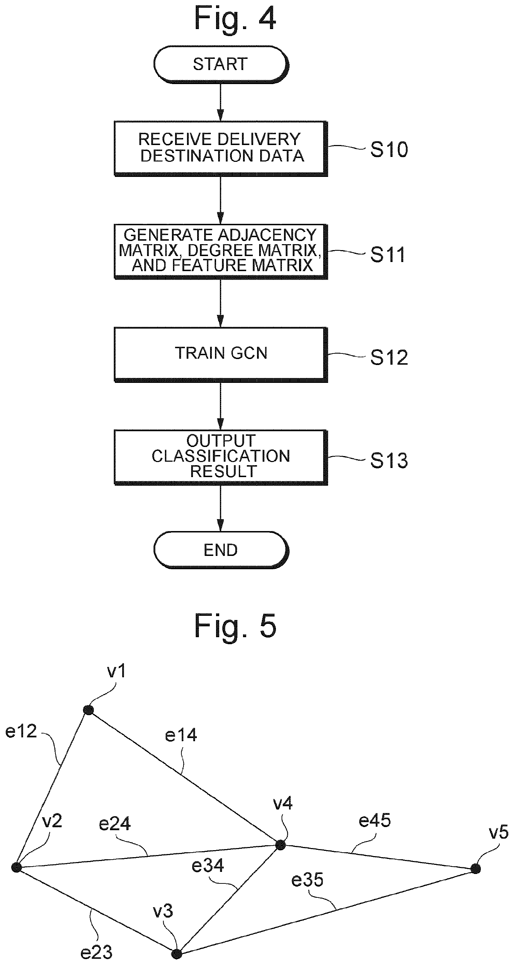

Fig. 4 is a flowchart showing an example of a processing procedure executed by the information processing apparatus 10. Referring to Fig. 4, the following specifically describes a method for classifying delivery destinations by the information processing apparatus 10 that trains a GCN without training data.

In step S10, the reception unit 101 receives an input of delivery destination data. For instance, the delivery destination data includes the location information of a delivery destination (e.g., latitude and longitude), the desired delivery time slot (e.g., 14:00 to 16:00), and information on the relationship between the delivery destination and the delivery depot. The reception unit 101 stores the received delivery destination data in the memory unit 100.

In step S11, the learning unit 102 generates, from the delivery destination data, an adjacency matrix and a feature matrix to be input to the GCN.

Now, a graph is explained. A graph is made up of a set of multiple vertices and edges connecting the vertices, and can be represented by Equation 1. A graph is also called a graph network.

$$G = \{V, E\} \quad \cdots (1)$$

where V denotes a set of vertices and E denotes a set of edges.

Fig. 5 illustrates an example of a graph. The graph illustrated in Fig. 5 is made up of five vertices (v1 to v5) and seven edges (e12, e14, e23, e24, e34, e35, e45) connecting the vertices. Each vertex can be associated with a feature amount. In this embodiment, the graph is defined so that the vertices, edges, and feature amounts of the vertices are regarded as the delivery destinations, the distances between the delivery destinations, and the features of the delivery destinations, respectively, and the graph is partitioned using a GCN, thus dividing the delivery destinations into a plurality of groups.

Next, the adjacency matrix A is explained. The adjacency matrix A indicates the connection relationship between edges, and 1 indicates that the edges are connected and 0 indicates that the edges are not connected. The component $A_{ij}$ of the adjacency matrix A in this embodiment can be expressed by Equation 2, where i and j indicate delivery destinations. For instance, if there are 100 delivery destinations, i and j are each represented by an integer from 1 to 100.

$$A_{i,j} = \begin{cases} 1 & if\, \omega_{i,j} \leq \theta \\ 0 & else \end{cases} \quad \cdots (2)$$

where $\omega_{i,j}$ denotes the distance between delivery destination i and delivery destination j, and $\theta$ denotes a predetermined threshold. The distance between delivery destinations may be the Euclidean distance, the haversine distance, or the actual distance on the map. The Euclidean distance is also called a L2 norm. The actual distance on the map may be obtained using an existing library called open source routing machine (OSRM), for example.

Here, $\theta$ can have any value. For instance, this may be a distance between delivery locations that are far apart and should not be classified into the same group. If the distance between delivery destinations i and j is greater than the value of $\theta$, $A_{ij}$ will be 0, so that no edge is connected between vertices i and j in the graph.

Even if the distance between two delivery destinations is $\theta$ or less, there may be an obstacle (such as a river) between the two delivery destinations that prevents the delivery vehicle (e.g., a truck) from passing through. In this case, the learning unit 102 may set the value of $A_{ij}$ corresponding to the two delivery destinations to 0. For instance, the reception unit 101 may receive from the user the designation that an obstacle exists between two delivery destinations, and the learning unit 102 may set the value of $A_{ij}$, which corresponds between the two delivery destinations received by the reception unit 101, to 0 among the components of the adjacency matrix.

Next, a degree matrix D is explained. A degree matrix D is a diagonal matrix that indicates how many edges are connected to each vertex. The component $D_{ij}$ of the degree matrix D in this embodiment can be expressed by Equation 3.

$$D_{ii} = \sum_{j=1}^{N} A_{ij} \quad \cdots (3)$$

where N indicates the number of vertices. For instance, in Fig. 5, two edges (e12, e14) are connected to vertex v1, so the value of component $D_{11}$ of the degree matrix D is 2.

Next a feature matrix X is explained. A feature matrix X indicates a feature amount associated with each vertex. For example, let that the number of vertices is 1 to n and i is the identifier of the feature amount. Then, the feature amount $X_i$ of each of the vertices 1 to n is expressed by the following Equation 4.

$$X_i = (x_{i1}, x_{i2}, x_{i3}, \cdots, x_{in}) \quad \cdots (4)$$

If the number of feature amounts is p, that is, if the identifier i of the feature amounts is represented by 1 to p, the feature matrix X is expressed by Equation 5.

$$X = [X_1, X_2, \cdots, X_p] \quad \cdots (5)$$

In this embodiment, the feature amounts associated with the delivery destinations may include the time slot that the recipient of the package wishes to have the package delivered. That is, the feature matrix X may include information on the desired time slot for delivery as features of a plurality of delivery destinations. For instance, information on the desired delivery time slot may be expressed with positive integers as in 1: 8:00 to 12:00, 2: 12:00 to 14:00, 3: 14:00 to 16:00, 4: 16:00 to 18:00, and 5: 18:00 to 20:00.

The feature amounts associated with the delivery destinations may include information on the ratio of the operating hours of the delivery vehicles to the desired delivery time slot (which may be called "overlap ratio"). That is, the feature matrix X may include, as features of a plurality of delivery destinations, information on the ratio of the hours during which the delivery vehicles are in operation to the desired delivery time slot. This information is represented by a value between 0 and 1. If it is 0, it indicates that there are no hours during which the delivery vehicles are in operation within the desired delivery time slot. If it is 1, it indicates that all the desired delivery time slots are included in the operating hours of the delivery vehicles. For instance, if the desired delivery time slot is from 8:00 to 12:00 and the operating hours of the delivery vehicles are from 10:00 to 16:00, the hours that include the operating time of the delivery vehicles within the desired delivery time slot (four hours) are two hours (10:00 to 12:00). Then, the ratio will be 2 hours÷4 hours = 0.5.

The feature amounts associated with the delivery destinations may also include information about the direction from the delivery depot to the destination (or vice versa) and information about the distance between each of the multiple delivery destinations and the delivery depot. That is, the feature matrix X may include, as features of a plurality of delivery destinations, information about the direction from the delivery depot to the delivery destinations or from the delivery destinations to the delivery depot, and information about the distance between each of the multiple delivery destinations and the delivery depot. This information about the distance may be the Euclidean distance, the haversine distance, or the actual distance on the map.

The feature amounts included in the feature matrix X are not limited to the above, and any feature amount may be included as long as it relates to the delivery destinations.

Specific examples of the adjacency matrix A, the degree matrix D, and the feature matrix X are shown in Equations 6 to 8. Note that the matrices shown in Equations 6 to 8 correspond to a graph having three vertices each connected by edges.

$$A = \begin{pmatrix} 0 & 1 & 1 \\ 1 & 0 & 1 \\ 1 & 1 & 0 \end{pmatrix} \quad \cdots (6)$$

$$D = \begin{pmatrix} 2 & 0 & 0 \\ 0 & 2 & 0 \\ 0 & 0 & 2 \end{pmatrix} \quad \cdots (7)$$

$$X = \begin{pmatrix} 0.5 & 0.2 & 0.3 & 0.1 \\ 0.1 & 0.6 & 0.7 & 0.2 \\ 0.2 & 0.9 & 0.5 & 0.4 \end{pmatrix} \quad \cdots (8)$$

The feature matrix X shown in Equation 8 indicates that four feature amounts are associated with one vertex (delivery destination). For instance, the first column of the feature matrix X has three values 0.5, 0.1 and 0.2. This means that the first feature amount at vertex 1 (delivery destination 1) is 0.5, the first feature amount at vertex 2 (delivery destination 2) is 0.1, and the first feature amount at vertex 3 (delivery destination 3) is 0.2. Similarly, it has three values in the second column: 0.2, 0.6, and 0.9. This means that the second feature amount at vertex 1 (delivery destination 1) is 0.2, the second feature amount at vertex 2 (delivery destination 2) is 0.6, and the second feature amount at vertex 3 (delivery destination 3) is 0.9.

In step S12, the learning unit 102 trains the GCN using a loss function. For instance, the learning unit 102 may train the GCN by setting a GCN model and a loss function to be used in a library or the like for training a neural network. Equation 9 shows an example of a GCN according to the present embodiment.

$$h^{(K)} = \sigma^{(K)}\left(A' h^{(K-1)} W^{(K)}\right) \quad \cdots (9)$$

where K is a positive integer starting from 1 and denotes the hierarchy of hidden layers in the GCN. Also, $h^{(K)}$ denotes the K-th hidden layer, and $\sigma$ denotes the activation function. A' is defined by Equation 10.

$$A' = \left(I_n + D^{-\frac{1}{2}} A D^{-\frac{1}{2}}\right) \quad \cdots (10)$$

where $I_n$ is the identity matrix.

In this embodiment, learning is performed using a GCN with two hidden layers. Equation 11 indicates the input layer, Equation 12 indicates the first hidden layer, and Equation 13 indicates the output layer.

$$h^{(0)} = X_{n \times p} \quad \cdots (11)$$

$$h^{(1)} = \sigma_{ReLU}\left(A' h^{(0)} W_{n \times l_0}\right) \quad \cdots (12)$$

$$h^{(2)} = \sigma_{softmax}\left(A' h^{(1)} W_{l_0 \times c}\right) \quad \cdots (13)$$

In Equation 11, n denotes the number of delivery destinations, and p denotes the number of feature amounts. Also, W in Equations 12 and 13 denotes a weight. Also, $l_0$ denotes the number of neurons in the first hidden layer, and c denotes the number of groups that the GCN can output.

As shown in Equation 11, the input layer of the GCN receives the components of the feature matrix. The output layer of the GCN outputs the probability of belonging to a group for each delivery destination. For instance, let that the number of destinations is 100 and the number of groups that can be output is 5. Then, five probabilities (probability of belonging to group 1, probability of belonging to group 2, probability of belonging to group 3, probability of belonging to group 4, probability of belonging to group 5) are output for each destination. The maximum value of the probability to be output may be 1, but the present embodiment is not limited to this.

The learning unit 102 then performs the process of training the GCN using the loss function. As described above, the learning unit 102 performs unsupervised learning using a first loss function defined such that the smaller the value for distance between delivery destinations belonging to the same group and the smaller the difference in features between delivery destinations belonging to the same group, the less the loss. This first loss function can be used to train the GCN so that delivery destinations with short distances between their delivery destinations and similar features belong to the same group.
Equations 14 and 15 show an example of the first loss function.

$$J^{(P)}(w) = \frac{1}{2} \sum_{k \in C} \sum_{i,j \in V} p_{ik} p_{jk} \omega_{ij} \quad \cdots (14)$$

$$\omega_{ij} = \lambda_1 \gamma_{ij} + \lambda_2 \sum_{m=1}^{p} [X_m(i) - X_m(j)]^2 \quad \cdots (15)$$

In Equations 14 and 15, k denotes the group number. C denotes a set of groups, and i and j denote delivery destinations. V denotes a set of delivery destinations. $P_{ik}$ denotes the probability that delivery destination i belongs to group k. $P_{ik}$ denotes the probability that delivery destination j belongs to group k. In these equations, p denotes the number of feature amounts, and m denotes the feature amount number. If there are three types of feature amounts, p=3 and m is an integer from 1 to 3. Values output from the output layer of the GCN are input to $P_{ik}$ and $P_{ij}$. $\gamma_{ij}$ denotes the distance between delivery destination i and delivery destination j. The distance between delivery destinations may be the Euclidean distance, the haversine distance, or the actual distance on the map. The actual distance on the map may be obtained using an existing library called OSRM, for example. $X_{m(i)}$ denotes the mth feature amount of delivery destination i, and Xm( j) denotes the mth feature amount of delivery destination j. $\lambda_1$ and $\lambda_2$ are user-definable scaling factors, and the user of the delivery management system 1 is allowed to set any values for them.

The first half "$\lambda_1 \gamma_{ij}$" in Equation 15 takes a smaller value as the distance between delivery destination i and delivery destination j decreases. The second half in Equation 15 (parts other than $\lambda_1 \gamma_{ij}$) takes a smaller value as the difference in the feature amounts between delivery destination i and delivery destination j decreases. When delivery destination i and delivery destination j belong to the same group, the value of $P_{ik} \times P_{jk}$ becomes large. This means that the value of $P_{ik} \times P_{jk} \times \omega_{ij}$ in Equation 14 becomes smaller as the distance between delivery destination i and delivery destination belonging to the same group becomes smaller and as the difference in the feature amounts between delivery destination i and delivery destination j belonging to the same group becomes smaller.

The learning unit 102 may perform unsupervised learning using a second loss function, in addition to the first loss function. The second loss function is defined such that the smaller the sum of the values calculated for each of the plurality of groups, the values being based on the difference between the total probability that each delivery destination belongs to a given group and the average number of delivery destinations per group, the less the loss. The "values being based on the difference between the total probability that each delivery destination belongs to a given group and the average number of delivery destinations per group" may be a square of the difference, the absolute value of the difference, or the square root of the square of the difference. This second loss function can be used to train the GCN so that the number of delivery destinations belonging to each group is averaged across the groups. Equation 16 shows an example of the second loss function.

$$J^{(I)}(w) = \sum_{k}^{|C|} \left( \sum_{i \in V} p_{ik} - \frac{|V|}{|C|} \right)^2 \quad \cdots (16)$$

In Equation 16, k denotes the group number. C denotes a set of groups. For example, if the number of groups that can be output by GCN is 10, then C = 10, and i denotes a delivery destination. V denotes a set of delivery destinations. If the number of delivery destinations is 500, then V=500. $P_{ik}$ denotes the probability that delivery destination i belongs to group k. $\Sigma P_{ik}$ denotes the sum of the probabilities that each delivery destination belongs to group k for all delivery destinations. |V|/|C| denotes the average number of delivery destinations per group.

The learning unit 102 may perform unsupervised learning using a third loss function, in addition to the first loss function. The third loss function is defined such that the closer the maximum probability of each delivery destination belonging to one of a plurality of groups is to the maximum value (e.g., but not limited to 1) of the values that can be taken as probabilities, the less the loss. This third loss function can be used to train the GCN so that the maximum probability that a delivery destination belongs to each group is closer to the maximum value that can be taken as a probability. For instance, let that, before training the GCN, the output probability that a delivery destination belongs to groups 1 to 3 is (0.3, 0.3, 0.4). In this case, the GCN may be trained with the third loss function, whereby the output result can be obtained in a way of clarifying which group it belongs to, as in (0.1, 0.1, 0.8). Equation 17 shows an example of the third loss function.

$$J^{(R)}(w) = \frac{1}{\sum_{i,j \in V} P_{ij}^2} \quad \cdots (17)$$

In Equation 17, i and j denote delivery destinations. V denotes a set of delivery destinations. $P_{ij}$ indicates a value obtained by multiplying the maximum probability that delivery destination i belongs to any group by the maximum probability that delivery destination j belongs to any group. For instance, if delivery destination i=1 has the highest probability of belonging to group 3 (P3) among the probabilities of belonging to the groups, and delivery destination j=2 has the highest probability of belonging to group 5 (P5) among the probabilities of belonging to the groups, then $P_{ij}$ (i=1, j=2) is P3 × P5.

The learning unit 102 may perform unsupervised learning using the second loss function and the third loss function, in addition to the first loss function. Equation 18 shows an example of a loss function when the first, second, and third loss functions are used.

$$J(w) = J^{(P)}(w) + J^{(I)}(w) + J^{(R)}(w) \quad \cdots (18)$$

In step S13, the output unit 103 outputs information about the groups to which a plurality of delivery destinations belongs, the information being obtained by inputting the feature matrix into the GCN trained by the learning unit 102. For instance, let that the number of destinations is 100 and the number of groups that can be output by the GCN is 5. Then, the probability of belonging to each group is output for each delivery destination. The group with the highest probability among the plurality of probabilities (in this example, five probabilities) output for the delivery destination means the group to which this delivery destination belongs.

<Specific example>

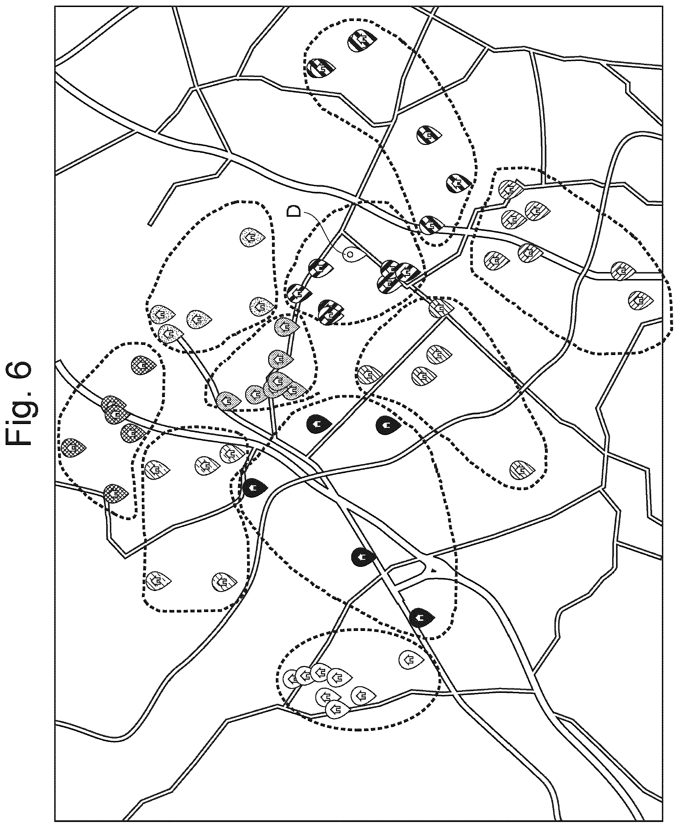

Fig. 6 illustrates the result of multiple delivery destinations classified into multiple groups. Point D denotes a delivery depot. In the example of Fig. 6, it can be seen that multiple delivery destinations are classified into ten groups.

<Summary>

According to the embodiment described above, a GCN is trained using only a loss function, thus enabling classification of a plurality of delivery destinations into a plurality of groups without preparing training data.
The embodiment described above is intended to facilitate the understanding of the present invention and is not intended to limit the present invention. The flowcharts and sequences described in the embodiment as well as each element in the above embodiments and the arrangement, materials, conditions, shapes, dimensions, etc., thereof are not limited to those described above and may be modified as appropriate. The configuration of one embodiment may be partially replaced with the corresponding configuration in another embodiment, or they may be combined.

<Addenda>

The present embodiment may be expressed as follows:

<Addendum 1>

An information processing apparatus configured to classify a plurality of delivery destinations into a plurality of groups, including:

a learning unit that performs unsupervised learning to train a graph convolutional neural network, which is determined using an adjacency matrix indicating a connection relationship of the plurality of delivery destinations, and receives as input a feature matrix indicating a feature of the plurality of delivery destinations, the learning unit performing unsupervised learning using a first loss function defined such that the smaller a value for distance between delivery destinations belonging to a same group and the smaller a difference in feature between delivery destinations belonging to a same group, the less a loss; and

an output unit that outputs information about a group to which the plurality of delivery destinations belongs, the information being obtained by inputting the feature matrix into the graph convolutional neural network trained by the learning unit.

<Addendum 2>

The information processing apparatus according to addendum 1, wherein the learning unit performs the unsupervised learning using a second loss function, in addition to the first loss function, the second loss function being defined such that the smaller a sum of values calculated for each of the plurality of groups, the values being based on a difference between a total probability that each delivery destination belongs to a given group and an average number of delivery destinations per group, the less a loss.

<Addendum 3>

The information processing apparatus according to addendum 1, wherein the learning unit performs the unsupervised learning using a third loss function, in addition to the first loss function, the third loss function being defined such that the closer a maximum probability of each delivery destination belonging to one of the plurality of groups is to a maximum value of values that can be taken as probabilities, the less a loss.

<Addendum 4>

The information processing apparatus according to addendum 1, wherein the learning unit performs the unsupervised learning using, in addition to the first loss function,

a second loss function that is defined such that the smaller a sum of values calculated for each of the plurality of groups, the values being based on a difference between a total probability that each delivery destination belongs to a given group and an average number of delivery destinations per group, the less a loss, and

a third loss function that is defined such that the closer a maximum probability of each delivery destination belonging to one of the plurality of groups is to a maximum value of values that can be taken as probabilities, the less a loss.

<Addendum 5>

The information processing apparatus according to any one of addenda 1 to 4, wherein the feature matrix includes information on a desired time slot for delivery as a feature of the plurality of delivery destinations.

<Addendum 6>

The information processing apparatus according to any one of addenda 1 to 5, wherein the feature matrix includes, as a feature of the plurality of delivery destinations, information on a ratio of hours during which a delivery vehicle is in operation overlapping a desired delivery time slot.

<Addendum 7>

The information processing apparatus according to any one of addenda 1 to 6, wherein the feature matrix includes, as a feature of the plurality of delivery destinations, information about a direction from a delivery depot to a delivery destination or from a delivery destination to the delivery depot, and information about a distance between each of the plurality of delivery destinations and the delivery depot.

<Addendum 8>

An information processing method executed by an information processing apparatus configured to classify a plurality of delivery destinations into a plurality of groups, including:

a step of performing unsupervised learning to train a graph convolutional neural network, which is determined using an adjacency matrix indicating a connection relationship of the plurality of delivery destinations, and receives as input a feature matrix indicating a feature of the plurality of delivery destinations, the training being unsupervised learning using a first loss function defined such that the smaller a value for distance between delivery destinations belonging to a same group and the smaller a difference in feature between delivery destinations belonging to a same group, the less a loss; and

a step of outputting information about a group to which the plurality of delivery destinations belongs, the information being obtained by inputting the feature matrix into the trained graph convolutional neural network.

<Addendum 9>

A program that makes a computer, which classifies a plurality of delivery destinations into a plurality of groups, execute:

a step of performing unsupervised learning to train a graph convolutional neural network, which is determined using an adjacency matrix indicating a connection relationship of the plurality of delivery destinations, and receives as input a feature matrix indicating a feature of the plurality of delivery destinations, the training being unsupervised learning using a first loss function defined such that the smaller a value for distance between delivery destinations belonging to a same group and the smaller a difference in feature between delivery destinations belonging to a same group, the less a loss; and

a step of outputting information about a group to which the plurality of delivery destinations belongs, the information being obtained by inputting the feature matrix into the trained graph convolutional neural network.

Description of Reference Numerals

1...delivery management system, 10...information processing apparatus, 11 ...processor, 12... storage device, 13...network IF, 14... input device, 15...output device, 20...terminal, 100...memory unit, 101...reception unit, 102...learning unit, 103...output unit

## Claims

1. An information processing apparatus configured to classify a plurality of delivery destinations into a plurality of groups, comprising:

   a learning unit that performs unsupervised learning to train a graph convolutional neural network, which is determined using an adjacency matrix indicating a connection relationship of the plurality of delivery destinations, and receives as input a feature matrix indicating a feature of the plurality of delivery destinations, the learning unit performing unsupervised learning using a first loss function defined such that the smaller a value for distance between delivery destinations belonging to a same group and the smaller a difference in feature between delivery destinations belonging to a same group, the less a loss; and

   an output unit that outputs information about a group to which the plurality of delivery destinations belongs, the information being obtained by inputting the feature matrix into the graph convolutional neural network trained by the learning unit.

2. The information processing apparatus according to claim 1, wherein the learning unit performs the unsupervised learning using a second loss function, in addition to the first loss function, the second loss function being defined such that the smaller a sum of values calculated for each of the plurality of groups, the values being based on a difference between a total probability that each delivery destination belongs to a given group and an average number of delivery destinations per group, the less a loss.

3. The information processing apparatus according to claim 1, wherein the learning unit performs the unsupervised learning using a third loss function, in addition to the first loss function, the third loss function being defined such that the closer a maximum probability of each delivery destination belonging to one of the plurality of groups is to a maximum value of values that can be taken as probabilities, the less a loss.

4. The information processing apparatus according to claim 1, wherein the learning unit performs the unsupervised learning using, in addition to the first loss function,

   a second loss function that is defined such that the smaller a sum of values calculated for each of the plurality of groups, the values being based on a difference between a total probability that each delivery destination belongs to a given group and an average number of delivery destinations per group, the less a loss, and

a third loss function that is defined such that the closer a maximum probability of each delivery destination belonging to one of the plurality of groups is to a maximum value of values that can be taken as probabilities, the less a loss.

5. The information processing apparatus according to any one of claims 1 to 4, wherein the feature matrix includes information on a desired time slot for delivery as a feature of the plurality of delivery destinations.

6. The information processing apparatus according to any one of claims 1 to 5, wherein the feature matrix includes, as a feature of the plurality of delivery destinations, information on a ratio of hours during which a delivery vehicle is in operation overlapping a desired delivery time slot.

7. The information processing apparatus according to any one of claims 1 to 6, wherein the feature matrix includes, as a feature of the plurality of delivery destinations, information about a direction from a delivery depot to a delivery destination or from a delivery destination to the delivery depot, and information about a distance between each of the plurality of delivery destinations and the delivery depot.

8. An information processing method executed by an information processing apparatus configured to classify a plurality of delivery destinations into a plurality of groups, comprising:

a step of performing unsupervised learning to train a graph convolutional neural network, which is determined using an adjacency matrix indicating a connection relationship of the plurality of delivery destinations, and receives as input a feature matrix indicating a feature of the plurality of delivery destinations, the training being unsupervised learning using a first loss function defined such that the smaller a value for distance between delivery destinations belonging to a same group and the smaller a difference in feature between delivery destinations belonging to a same group, the less a loss; and

a step of outputting information about a group to which the plurality of delivery destinations belongs, the information being obtained by inputting the feature matrix into the trained graph convolutional neural network.

9. A program that makes a computer, which classifies a plurality of delivery destinations into a plurality of groups, execute:

a step of performing unsupervised learning to train a graph convolutional neural network, which is determined using an adjacency matrix indicating a connection relationship of the plurality of delivery destinations, and receives as input a feature matrix indicating a feature of the plurality of delivery destinations, the training being unsupervised learning using a first loss function defined such that the smaller a value for distance between delivery destinations belonging to a same group and the smaller a difference in feature between delivery destinations belonging to a same group, the less a loss; and

a step of outputting information about a group to which the plurality of delivery destinations belongs, the information being obtained by inputting the feature matrix into the trained graph convolutional neural network.

# Fig. 1

1

INFORMATION
PROCESSING
APPARATUS ⎯ 10

N

TERMINAL ⎯ 20

# Fig. 2

EP 4 390 762 A1

Fig. 3

EP 4 390 762 A1

# Fig. 4

```
       ( START )
           │
           ▼
┌─────────────────────┐
│  RECEIVE DELIVERY   │─── S10
│  DESTINATION DATA   │
└─────────────────────┘
           │
           ▼
┌─────────────────────┐
│ GENERATE ADJACENCY  │
│ MATRIX, DEGREE MATRIX,│─── S11
│ AND FEATURE MATRIX  │
└─────────────────────┘
           │
           ▼
┌─────────────────────┐
│     TRAIN GCN       │─── S12
└─────────────────────┘
           │
           ▼
┌─────────────────────┐
│      OUTPUT         │
│  CLASSIFICATION     │─── S13
│     RESULT          │
└─────────────────────┘
           │
           ▼
        ( END )
```

# Fig. 5

Fig. 6

Europäisches
Patentamt

European
Patent Office

Office européen
des brevets

## EUROPEAN SEARCH REPORT

**Application Number**

EP 23 21 3668

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRYAN WILDER ET AL: "End to end learning and optimization on graphs", ARXIV.ORG, CORNELL UNIVERSITY LIBRARY, 201 OLIN LIBRARY CORNELL UNIVERSITY ITHACA, NY 14853, 31 May 2019 (2019-05-31), XP081574198, * abstract * * sections 1, 3-5 * | 1-9 | INV. G06N3/042 G06N3/0464 G06N3/088 G06N5/022 G06Q10/0835 G06Q10/047 |
| A | HU JILIN ET AL: "Stochastic Weight Completion for Road Networks Using Graph Convolutional Networks", 2019 IEEE 35TH INTERNATIONAL CONFERENCE ON DATA ENGINEERING (ICDE), IEEE, 8 April 2019 (2019-04-08), pages 1274-1285, XP033556920, DOI: 10.1109/ICDE.2019.00116 [retrieved on 2019-06-04] * abstract * * sections I, III, IV * | 1-9 | |

**TECHNICAL FIELDS SEARCHED (IPC)**

G06N
G06Q

The present search report has been drawn up for all claims

| Place of search | Date of completion of the search | Examiner |
|---|---|---|
| The Hague | 29 April 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **THOMAS N. KIPF ; MAX WELLING.** *Semi-Supervised Classification with Graph Convolutional Networks,* 24 November 2022, http://arxiv.org/abs/1609.02907>